# EUROPÄISCHE PATENTANMELDUNG

(11) **EP 0 896 010 A1**
(43) Veröffentlichungstag der Anmeldung: **10.02.1999**
(21) Anmeldenummer: 98114495.9
(22) Anmeldetag: 01.08.1998
(51) Int. Cl.: C08G 18/18

(54) **Mischungen enthaltend organische Amine und Polysäuren**

(30) Priorität: 07.08.1997 DE 19734183
(71) Anmelder: BASF AKTIENGESELLSCHAFT, 67056 Ludwigshafen (DE)
(72) Erfinder: Scherzer, Dietrich, Dr., 67433 Neustadt (DE); Treuling, Ulrich, Dr., 64625 Bensheim (DE); Riebel, Lothar, 67227 Frankenthal (DE); Reck, Bernd, Dr., 67269 Grünstadt (DE)

(57) **Zusammenfassung**

Mischung enthaltend (a) mindestens ein organisches Amin und (b) mindestens eine organische Polysäure, die die folgende Struktureinheit aufweist: 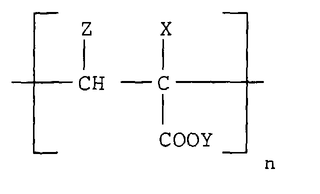 mit
- n:: eine ganze Zahl der Zahlenmenge von einschließlich 2 bis einschließlich 2600;
- X:: H, Methyl, Ethyl;
- Y:: H oder ein Kation;
- Z:: H oder -COOY.

## Beschreibung

Die Erfindung bezieht sich auf Mischungen enthaltend (a) mindestens ein organisches Amin und (b) mindestens eine organische Polysäure. Des Weiteren betrifft die Erfindung Verfahren zur Herstellung von Polyisocyanat-Polyadditionsprodukten durch Umsetzung von Isocyanaten mit gegenüber Isocyanaten reaktiven Verbindungen in Gegenwart von Katalysatoren und gegebenenfalls Treibmitteln, Zusatzstoffen und/oder Hilfsmitteln.

Die Herstellung von Polyisocyanat-Polyadditionsprodukten durch Umsetzung von Polyisocyanaten mit gegenüber Isocyanaten reaktiven Verbindungen, Katalysatoren, die die Reaktion der gegenüber Isocyanaten reaktiven Stoffe mit Isocyanaten beschleunigen und gegebenenfalls Treibmittel, Zusatzstoffe, und/oder Hilfsmittel ist allgemein bekannt. Als Katalysatoren können beispielsweise organische Amine eingesetzt werden, die bei einer Herstellung von Polyurethanschäumen bevorzugt sowohl die Treibreaktion, d.h. die Umsetzung der Isocyanatgruppen mit beispielsweise Wasser zur Bildung von Kohlendioxid, als auch die Vernetzungsreaktion beschleunigen. Um das Fließvermögen und die Durchhärtung der Reaktionsmischungen zu verbessern, kann es insbesondere bei der Herstellung von geschäumten Polyurethanen vorteilhaft sein, die Amine blockiert durch Salzbildung mit einer organischen Säure, üblicherweise Ameisen-, Essig- oder Ethylhexansäure, einzusetzen. Während der Polyisocyanat-Polyadditionsreaktion unter Einwirkung der Reaktionswärme zerfallen die thermisch reversibel blockierten Katalysatoren, das katalytisch aktive Amin wird freigesetzt und die Vernetzungs- oder Schäumreaktion setzt erst nach ausreichender Start- und Steigzeit des Reaktionsgemisches verstärkt ein. Katalysatoren dieser Art werden in DE-A 28 12 256 beschrieben.

Wesentliche Nachteile dieser mit niedermolekularen organischen Säuren blockierten Amine ist die Freisetzung der Säuren während der Polyadditionsreaktion, da die Säuren zu einer Geruchsbelästigung und zur Korrosion der Apparaturen führen können.

Aufgabe der vorliegenden Erfindung war es somit, eine Mischung zu entwickeln, die als Katalysator bei der Polyisocyanat-Polyadditionsreaktion zu einer geringeren Geruchsbelästigung, einer verminderten Korrosion an den Apparaten, einem ausgezeichneten Härtungsverhalten der Reaktionsmischung mit einer optimierten Start- und Steigzeit führt.

Diese Aufgabe konnte durch Mischungen enthaltend (a) mindestens ein organisches Amin und (b) mindestens eine organische Polysäure, die die folgende Struktureinheit aufweist: 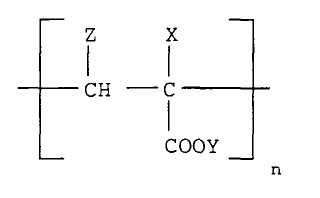 mit
- n:: eine ganze Zahl der Zahlenmenge von einschließlich 2 bis einschließlich 2600;
- X:: H oder geradkettiger oder verzweigter Alkylrest mit 1 bis 6 Kohlenstoffatomen, bevorzugt H, Methyl, Ethyl;
- Y:: H oder ein Kation;
- Z:: H oder -COOY;
gelöst werden.

Bevorzugt beträgt n in den dargestellten Formeln für die organischen Polysäuren 26 bis 1000, besonders bevorzugt 60 bis 400. Bevorzugt werden in den Mischungen Polyacrylsäuren, Polymethacrylsäuren, Polymere der Maleinsäure und/oder Copolymerisate hergestellt mit mindestens zwei der folgenden Säuren: Acrylsäure, Methacrylsäure, Maleinsäure eingesetzt. Die Polysäuren können beispielsweise nach allgemein bekannten Polymerisationsverfahren aus den bekannten Ausgangsstoffen, beispielsweise Acrylsäure und/oder Methacrylsäure und/oder Maleinsäure hergestellt werden. Die Polysäuren können sowohl als Säuren, wobei Y in Formel 1 Wasserstoff entspricht, als auch als Carboxylate in der erfindungsgemäßen Mischung vorliegen. Als Gegenionen der Carboxylate können allgemein übliche Kationen, beispielsweise Na+, K+ und/oder die protonierten Amine dienen. Besonders wirksam für die Bildung von Isocyanuratstrukturen sind die Kaliumsalze solcher organischen Polysäuren. Benachbart zu der erfindungsgemäßen Struktureinheit, beispielsweise an den Enden der Polysäure, können übliche Struktureinheiten eingesetzt werden, wie sie beispielsweise bei einer anionischen oder radikalischen Polymerisation, beispielsweise durch den Einsatz von Initiatorverbindungen, von ungesättigten Carbonsäuren entstehen.

Bevorzugt weisen die erfindungsgemäßen Polysäure mindestens eine der folgenden Struktureinheiten (i), (ii) und/oder (iii) auf, wobei auch Polysäuren, die als Copolymerisate mindestens 2 unterschiedliche Struktureinheiten der folgenden Struktureinheiten aufweisen, möglich sind: 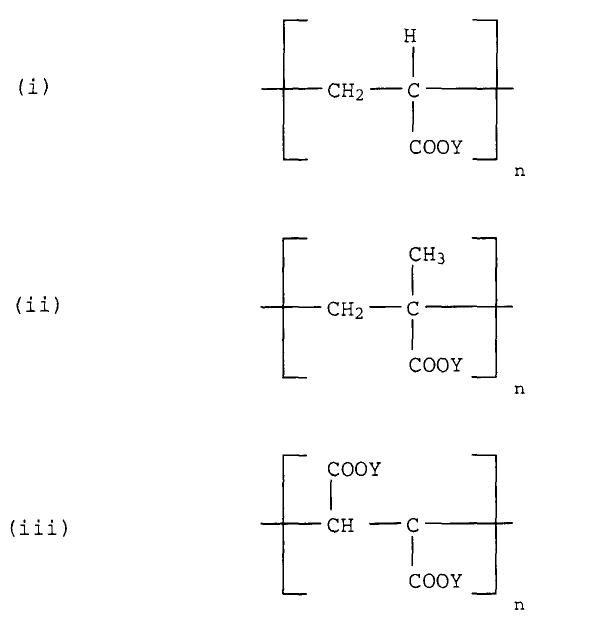 wobei n und Y die bereits genannten Bedeutungen haben. Die erfindungsgemäßen Polysäuren können die angegebenen Struktureinheiten in Form von Blöcken (Blockpolymerisate) als auch statistisch verteilt enthalten.

Beispielsweise kann mindestens eine Polysäure der folgenden allgemeinen Formel eingesetzt werden: 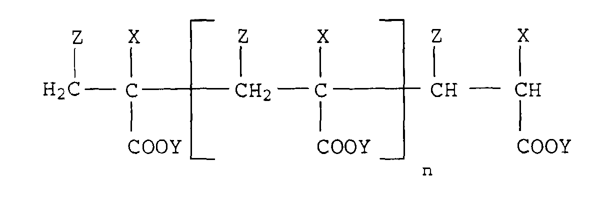 mit
- n:: eine ganze Zahl der Zahlenmenge von einschließlich 0 bis einschließlich 2600;
- X:: H oder geradkettiger oder verzweigter Alkylrest mit 1 bis 6 Kohlenstoffatomen, bevorzugt H, Methyl, Ethyl;
- Y:: H oder ein Kation;
- Z:: H oder -COOY.

Zusätzlich zu den Polysäuren (a) enthalten die erfindungsgemäßen Mischungen organische Amine, beispielsweise Triethylamin, Triethylendiamin, Tributylamin, Dimethylbenzylamin, N,N,N',N'-Tetramethylethylendiamin, N,N,N',N'-Tetramethyl-butandiamin, N,N,N',N'-Tetramethyl-hexan-1,6-diamin, Dimethylcyclohexylamin, Pentamethyldipropylentriamin, Pentamethyldiethylentriamin, 3-Methyl-6-dimethylamino-3-azapentol, Dimethylaminopropylamin, 1,3-Bisdimethylaminobutan, Bis-(2-dimethylaminoethyl)-ether, N-Ethylmorpholin, N-Methylmorpholin, N-Cyclohexylmorpholin, 2-Dimethylamino-ethoxy-ethanol, Dimethylethanolamin, Tetramethylhexamethylendiamin, Dimethylamino-N-methyl-ethanolamin, N-Methylimidazol, N-Formyl-N,N'-dimethylbutylendiamin, N-Dimethylaminoethylmorpholin, 3,3'-Bis-dimethylamino-di-n-propylamin und/oder 2,2'-Dipiparazin-diisopropylether, Dimethylpiparazin, N,N'-Bis-(3-aminopropyl)ethylendiamin und/oder Tris-(N,N-dimethylaminopropyl)-s-hexahydrotriazin, oder Mischungen enthaltend mindestens zwei der genannten Amine, wobei auch höhermolekulare tertiäre Amine, wie sie beispielsweise in DE-A 28 12 256 beschrieben sind, möglich sind. Bevorzugt setzt man tertiäre aliphatische und/oder cycloaliphatische Amine in den Mischungen ein, besonders bevorzugt Triethylendiamin.

Das Gewichtsverhältnis von (a) zu (b) in den erfindungsgemäßen Mischungen beträgt bevorzugt 0,2 : 1 bis 5 : 1, wobei besonders bevorzugt je nach eingesetztem Amin das molare Verhältnis der Carboxylgruppen und/oder Carboxylatgruppen der Polysäuren zu den tertiären Amingruppen in der Mischung 0,5 : 1 bis 2 : 1 beträgt.

Die Polysäuren können in der Mischung zumindestens teilweise deprotoniert und als Salz mit den zumindestens teilweise protonierten Aminen vorliegen. Bevorzugt liegen die organischen Polysäuren (a) zusammen mit den organischen Amine (b) zumindestens überwiegend als Salz vor, besonders bevorzugt vollständig als Salz vor, so daß die katalytische Aktivität der organischen Amine (b) durch die Salzbildung mit den organischen Polysäuren (a) maskiert wird. Durch eine allgemein bekannte Wärmebehandlung bei der Herstellung der Polyisocyanat-Polyadditionsprodukt bzw. durch die Reaktionswärme bei dieser Herstellung können die organischen Amine (b) freigesetzt werden und ihre katalytische Aktivität entfalten.

Zusätzlich zu den erfindungsgemäßen Polysäuren (a) und organischen Aminen (b) können die Mischungen gegenüber Isocyanaten reaktive Verbindungen (c) mit mindestens einer Hydroxyl- und/oder Amingruppe und einem Molekulargewicht von 60 bis 10000, Treibmittel, Zusatzstoffe, Hilfsmittel und/oder übliche weitere Katalysatoren, die die Reaktion der gegenüber Isocyanaten reaktiven Stoffe (c) mit Isocyanaten, beispielsweise die Treib- und/oder Vernetzungsreaktion, zusätzlich zu den erfindungsgemäßen Aminen beschleunigen, beispielsweise organische Metallsalze wie z.B. organische Zinnsalze, enthalten.

Außerdem ist es möglich, daß die Mischungen zusätzlich zu (a) und (b) Verbindungen mit mindestens einer freien Isocyanatgruppe sowie gegebenenfalls die oben genannten üblichen weiteren Katalysatoren, Treibmittel, Zusatzstoffe, und/oder Hilfsmittel enthalten. Somit werden die Polysäuren bevorzugt als Salz mit den Aminen in den erfindungsgemäßen Mischungen eingesetzt, insbesondere falls Isocyanate in der erfindungsgemäßen Mischung enthalten sind. Das molare Verhältnis der Amingruppen von (a) zu den Carboxylgruppen von (b) beträgt in diesem Fall, das die Mischungen Isocyanate enthalten, bevorzugt 0,8:1 bis 1,3 : 1, besonders bevorzugt 1 : 1.

Die erfindungsgemäßen Mischungen kann man bevorzugt zur Herstellung von Polyisocyanat-Polyadditionsprodukten nach allgemein bekannten Verfahren durch Umsetzung von Isocyanaten mit gegenüber Isocyanaten reaktiven Verbindungen in Gegenwart von Katalysatoren und gegebenenfalls Treibmitteln, Zusatzstoffen und/oder Hilfsmitteln einsetzen. Als Polyisocyanat-Polyadditionsprodukte können beispielsweise kompakte oder zellige, beispielsweise mikrozellige, weiche, halbharte oder harte Polyurethanschäume, oder thermoplastische Polyurethane nach üblichen Verfahren unter Verwendung der erfindungsgemäßen Mischungen hergestellt werden. Bevorzugt setzt man die erfindungsgemäßen Mischungen in Verfahren zur Herstellung von geschäumten Polyisocyanat-Polyadditionsprodukten durch Umsetzung von Isocyanaten mit gegenüber Isocyanaten reaktiven Verbindungen in Gegenwart von Katalysatoren, Treibmitteln, Zusatzstoffen und/oder Hilfsmitteln ein.

Die Polysäuren der erfindungsgemäßen Mischungen können nach der Umsetzung der Reaktionsgemische zur Herstellung der Polyisocyanat-Polyadditionsprodukten als Säuren, zumindestens teilweise deprotoniert, d.h. als Salze, und/oder als Umsetzungsprodukte durch eine Reaktion mit den Polyisocyanaten in den PolyisocyanatPolyadditionsprodukten vorliegen. Soweit bei der Herstellung der Polyisocyanat-Polyadditionsprodukte die Gegenwart von Wasser nicht unerwünscht ist oder sogar Wasser beispielsweise als Treibmittel eingesetzt wird, können die organischen Polysäuren als wässrige Lösungen oder Suspensionen, beispielsweise in einer Konzentration von 10 bis 80 Gew.-%, bezogen auf das Gewicht des Wassers, eingesetzt werden.

Zu den Ausgangsstoffen für die Herstellung der PolyisocyanatPolyadditionsprodukte kann beispielhaft das Folgenden ausgeführt werden:

Als Polyisocyanate kommen die an sich bekannten aliphatischen, cycloaliphatischen, araliphatischen und vorzugsweise aromatischen mehrwertigen organischen Isocyanate in Frage.

Im einzelnen seien beispielhaft genannt: Alkylendiisocyanate mit 4 bis 12 Kohlenstoffatomen im Alkylenrest, wie 1,12-Dodecan-diisocyanat, 2-Ethyl-tetramethylen-diisocyanat-1,4, 2-Methyl-pentamethylen-diisocyanat-1,5, Tetramethylen-diisocyanat-1,4 und vorzugsweise Hexamethylen-diisocyanat-1,6; cycloaliphatische Diisocyanate, wie Cyclohexan-1,3- und -1,4-diisocyanat sowie beliebige Gemische dieser Isomeren, 1-Isocyanato-3,3,5-trimethyl-5-isocyanatomethyl-cyclohexan (Isophoron-diisocyanat), 2,4- und 2,6-Hexahydrotoluylen-diisocyanat sowie die entsprechenden Isomerengemische, 4,4'-, 2,2'- und 2,4'-Dicyclohexylmethan-diisocyanat sowie die entsprechenden Isomerengemische, und vorzugsweise aromatische Di- und Polyisocyanate, wie z.B. 2,4- und 2,6-Toluylen-diisocyanat (TDI) und die entsprechenden Isomerengemische, 4,4'-, 2,4'- und 2,2'-Diphenylmethan-diisocyanat (MDI) und die entsprechenden Isomerengemische, Naphthalin-1,5-diisocyanat (NDI), Mischungen aus 4,4'- und 2,4'-Diphenylmethan-diisocyanaten, Mischungen aus NDI und 4,4'- und/oder 2,4'-Diphenylmethan-diisocyanaten, 3,3'-Dimethyl-4,4'-diisocyanatodiphenyl (TODI), Mischungen aus TODI und 4,4'- und/oder 2,4'-Diphenylmethan-diisocyanaten, Polyphenyl-polymethylen-polyisocyanate, Mischungen aus 4,4'-, 2,4'- und 2,2'-Diphenylmethan-diisocyanaten und Polyphenylpolymethylenpolyisocyanaten (Roh-MDI) und Mischungen aus Roh-MDI und Toluylen-diisocyanaten. Die organischen Di- und Polyisocyanate können einzeln oder in Form ihrer Mischungen eingesetzt werden.

Häufig werden auch sogenannte modifizierte mehrwertige Isocyanate, d.h. Produkte, die durch chemische Umsetzung organischer Di- und/oder Polyisocyanate erhalten werden, verwendet. Beispielhaft genannt seien Ester-, Harnstoff-, Biuret-, Allophanat-, Carbodiimid-, Isocyanurat-, Uretdion- und/oder Urethangruppen enthaltende Di- und/oder Polyisocyanate. Im einzelnen kommen beispielsweise in Betracht: Urethangruppen enthaltende, d.h. beispielsweise mit Di- und/oder Polyoxyalkylenglykolen modifizierte organische, vorzugsweise aromatische Polyisocyanate mit NCO-Gehalten von 33,6 bis 15 Gew.-%, vorzugsweise von 31 bis 21 Gew.-%, bezogen auf das Gesamtgewicht, modifiziertes 4,4'-Diphenylmethan-diisocyanat, modifizierte 4,4'- und 2,4'-Diphenylmethan-diisocyanatmischungen, modifiziertes NDI, modifiziertes TODI, modifiziertes Roh-MDI und/oder 2,4- bzw. 2,6-'Toluylen-diisocyanat, wobei als Di- bzw. Polyoxyalkylenglykole, die einzeln oder als Gemische eingesetzt werden können, beispielsweise genannt seien: Diethylen-, Dipropylenglykol, Polyoxyethylen-, Polyoxypropylen- und Polyoxypropylen-polyoxyethylen-glykole, -triole und/oder -tetrole. Geeignet sind auch NCO-Gruppen enthaltende Prepolymere mit NCO-Gehalten von 25 bis 3,5 Gew.-%, vorzugsweise von 21 bis 14 Gew.-%, bezogen auf das Gesamtgewicht, hergestellt aus beispielsweise Polyester- und/oder vorzugsweise Polyetherpolyolen und 4,4'-Diphenylmethan-diisocyanat, Mischungen aus 2,4'- und 4,4'-Diphenylmethan-diisocyanat, NDI, TODI, Mischungen aus NDI und Isomeren des MDI, 2,4- und/oder 2,6-Toluylen-diisocyanaten oder Roh-MDI. Bewährt haben sich ferner flüssige, Carbodiimidgruppen und/oder Isocyanuratringe enthaltende Polyisocyanate mit NCO-Gehalten von 33,6 bis 15, vorzugsweise 31 bis 21 Gew.-%, bezogen auf das Gesamtgewicht, z.B. auf Basis von 4,4'-, 2,4'- und/oder 2,2'-Diphenylmethan-diisocyanat, NDI, TODI und/oder 2,4- und/oder 2,6-Toluylen-diisocyanat.

Die modifizierten Polyisocyanate können miteinander oder mit unmodifizierten organischen Polyisocyanaten wie z.B. 2,4'-, 4,4'-Diphenyl-methan-diisocyanat, NDI, TODI, Roh-MDI, 2,4- und/oder 2,6-Toluylen-diisocyanat gegebenenfalls gemischt werden.

Als gegenüber Isocyanaten reaktive Verbindungen (c) mit mindestens einer Hydroxyl- und/oder Amingruppe, üblicherweise mit mindestens zwei reaktiven Wasserstoffatomen, werden zweckmäßigerweise solche mit einer Funktionalität von 2 bis 8, vorzugsweise 2 bis 6, und einem Molekulargewicht von üblicherweise 60 bis 10000, verwendet. Bewährt haben sich z.B. Polyether-polyamine und/oder vorzugsweise Polyole ausgewählt aus der Gruppe der Polyether-polyole, Polyester-polyole, Polythioether-polyole, Polyesteramide, hydroxylgruppenhaltigen Polyacetale und hydroxylgruppenhaltigen aliphatischen Polycarbonate oder Mischungen aus mindestens zwei der genannten Polyole. Vorzugsweise Anwendung finden Polyesterpolyole und/oder Polyether-polyole, die nach bekannten Verfahren hergestellt werden können.

Die Polyester-polyole besitzen vorzugsweise eine Funktionalität von 2 bis 4, insbesondere 2 bis 3, und ein Molekulargewicht von üblicherweise 500 bis 3000, vorzugsweise 1200 bis 3000 und insbesondere 1800 bis 2500.

Die Polyether-polyole, besitzen eine Funktionalität von vorzugsweise 2 bis 6 und üblicherweise Molekulargewichte von 60 bis 8000, bevoprzugt 500 bis 8000.

Als Polyether-polyole eignen sich beispielsweise auch polymer-modifizierte Polyether-polyole, vorzugsweise Pfropf-polyetherpolyole, insbesondere solche auf Styrol- und/oder Acrylnitrilbasis, die durch in situ Polymerisation von Acrylnitril, Styrol oder vorzugsweise Mischungen aus Styrol und Acrylnitril erhalten werden können.

Die Polyether-polyole können ebenso wie die Polyester-polyole einzeln oder in Form von Mischungen verwendet werden. Ferner können sie mit den Pfropf-polyether-polyolen oder Polyester-polyolen sowie hydroxylgruppenhaltigen Polyesteramiden, Polyacetalen, Polycarbonaten und/oder Polyether-polyaminen gemischt werden.

Als gegenüber Isocyanaten reaktive Verbindungen (c) mit einem Molekulargewicht von 60 bis 10000 können des Weiteren Kettenverlängerungs- und/oder Vernetzungsmitteln verwendet werden. Beispielsweise zur Modifizierung der mechanischen Eigenschaften der mit diesen Substanzen hergestellten Polyisocyanat-Polyadditionsprodukte, z.B. der Härte, kann sich der Zusatz von Kettenverlängerungsmitteln, Vernetzungsmitteln oder gegebenenfalls auch Gemischen davon als vorteilhaft erweisen. Als Kettenverlängerungs- und/oder Vernetzungsmittel können Wasser, Diole und/oder Triole mit Molekulargewichten von 60 bis 500, vorzugsweise von 60 bis 300 verwendet werden. In Betracht kommen beispielsweise aliphatische, cycloaliphatische und/oder araliphatische Diole mit 2 bis 14, vorzugsweise 4 bis 10 Kohlenstoffatomen, wie z.B. Ethylenglykol, Propandiol-1,3, Decandiol-1,10, o-, m-, p-Dihydroxycyclohexan, Diethylenglykol, Dipropylenglykol und vorzugsweise Butandiol-1,4, Hexandiol-1,6 und Bis-(2-hydroxy-ethyl)-hydrochinon, Triole, wie 1,2,4-, 1,3,5-Trihydroxy-cyclohexan, Glycerin und Trimethylolpropan und niedermolekulare hydroxylgruppenhaltige Polyalkylenoxide auf Basis Ethylen- und/oder 1,2-Propylenoxid und Diolen und/oder Triolen als Startermoleküle.

Sofern zur Herstellung der Polyisocyanat-Polyadditionsprodukte Kettenverlängerungsmittel, Vernetzungsmittel oder Mischungen davon Anwendung finden, kommen diese zweckmäßigerweise in einer Menge von 0 bis 20 Gew.-%, vorzugsweise von 2 bis 8 Gew.-%, bezogen auf das Gewicht der gegenüber den Isocyanaten reaktiven Verbindungen zum Einsatz.

Als Treibmittel können gegebenenfalls, bevorzugt zur Herstellung von geschäumten Polyurethanen, allgemein bekannte Treibmittel, wie z.B. Stoffe, die einen Siedepunkt unter Normaldruck im Bereich von -40°C bis 120°C besitzen, Gase und/oder feste Treibmittel und/oder Wasser eingesetzt werden, beispielsweise Kohlendioxid, Alkane und oder Cycloalkane wie beispielsweise Isobutan, Propan, n- oder iso-Butan, n-Pentan und Cyclopentan, Ether wie beispielsweise Diethylether, Methylisobutylether und Dimethylether, Stickstoff, Sauerstoff, Helium, Argon, Lachgas, halogenierte Kohlenwasserstoffe und/oder teilhalogenierte Kohlenwasserstoffe wie beispielsweise Trifluormethan, Monochlortrifluorethan, Difluorethan, Pentafluorethan, Tetrafluorethan oder Mischungen, die mindestens zwei der beispielhaft genannten Treibmittel enthalten.

Als Katalysatoren gegebenenfalls zusätzlich zu den in den erfindungsgemäßen Mischungen enthaltenden Katalysatoren können Verbindungen verwendet werden, die die Reaktion der reaktive Wasserstoffatome, insbesondere Hydroxylgruppen, enthaltenden Verbindungen mit den organischen, gegebenenfalls modifizierten Polyisocyanaten (a) stark beschleunigen. In Betracht kommen beispielsweise organische Metallverbindungen, vorzugsweise organische Zinnverbindungen, wie Zinn-(II)-salze von organischen Carbonsäuren, z.B. Zinn-(II)-acetat, Zinn-(II)-octoat, Zinn- (II)-ethylhexoat und Zinn-(II)-laurat und die Dialkylzinn-(IV)-salze von organischen Carbonsäuren, z.B. Dibutyl-zinndiacetat, Dibutylzinndilaurat, Dibutylzinn-maleat und Dioctylzinn-diacetat.

Als Hilfsmittel und/oder Zusatzstoffe seien beispielsweise oberflächenaktive Substanzen, Schaumstabilisatoren, Zellregler, Füllstoffe, Farbstoffe, Pigmente, Flammschutzmittel, Hydrolyseschutzmittel, fungistatische und bakteriostatisch wirkende Substanzen genannt.

Zur Herstellung der Polyisocyanat-Polyadditionsprodukte, beispielsweise kompakten oder zelligen, beispielsweise mikrozelligen, thermoplastischen oder vernetzten, harten, halbharten oder weichen, elastischen oder unelastischen Polyurethanen werden die organischen Polyisocyanate und die gegenüber Isocyanaten reaktiven Verbindungen mit einem Molekulargewicht von 60 bis 10000 g/mol üblicherweise in solchen Mengen zur Umsetzung gebracht, daß das Aquivalenzverhältnis von NCO-Gruppen der Polyisocyanate zur Summe der reaktiven Wasserstoffatome der gegenüber Isocyanaten reaktiven Verbindungen 0,5 bis 5 : 1 vorzugsweise 0,95 bis 3 : 1 und insbesondere 1 bis 2 : 1 beträgt.

Gegebenenfalls kann es von Vorteil sein, daß die Polyurethane zumindest teilweise Isocyanuratgruppen gebunden enthalten. In diesen Fällen kann ein Verhältnis von NCO-Gruppen der Polyisocyanate zur Summe der reaktiven Wasserstoffatome von 1,5 bis 60 : 1, vorzugsweise 1,5 bis 8 : 1 bevorzugt gewählt werden.

Die Polyisocyanat-Polyadditionsprodukte können beispielsweise nach dem one-shot Verfahren, beispielsweise mit Hilfe der Hochdruck- oder Niederdruck-Technik in offenen oder geschlossenen Formwerkzeugen oder Bandanlagen, oder dem bekannten Prepolymer-Verfahren hergestellt werden.

Die Erfindung soll anhand der folgenden Beispiele dargestellt werden.

Die Polyolkomponente der Rezeptur enthält:
- 62.7 g: eines Pflanzenölpolyols mit einer Hydroxylzahl von 210 mg KOH/g der Fa. Henkel (Sovermol® 1136/11),
- 36,0 g: eines Polyetherpolyols auf der Basis von Glycerin und Propylenoxid mit einer Hydroxylzahl von 560 der BASF Aktiengesellschaft (Lupranol® 3530),
- 0,3 g: eines Silikonstabilisators der Fa. Goldschmidt (Tegostab® B8404)
sowie 1,0 g Wasser in den Beispielen 1, 3, 4, 5 und 7 oder 0,5 g Wasser in den Beispielen 2 und 6 wurden unter Zugabe der in Tabelle 1 dargestellten Katalysatoren gegebenenfalls in Kombination mit den angegebenen Säuremengen in einem 1000 ml Becher unter intensivem Rühren mit einem Laborrührer mit Lupranat® M20W der BASF Aktiengesellschaft, einem Polyisocyanat auf der Basis von MDI, in einem Verhältnis der Isocyanatgruppen zu den Hydroxylgruppen der gegenüber den Isocyanaten reaktiven Verbindungen von 1,1 : 1,0 (Index 110) vermischt, in einen anderen Kunststoffbecher umgegossen und zur Reaktion gebracht. Die Reaktionszeiten wurden nach allgemein üblichen Vorschriften bestimmt. Die Härtung wurde durch Aufschneiden des Schaumes nach 3 min beurteilt.

Die Ergebnisse der Beispiele sowie die zugegebenen Katalysator- und gegebenenfalls Säuremengen sind in Tabelle 1 dargestellt.

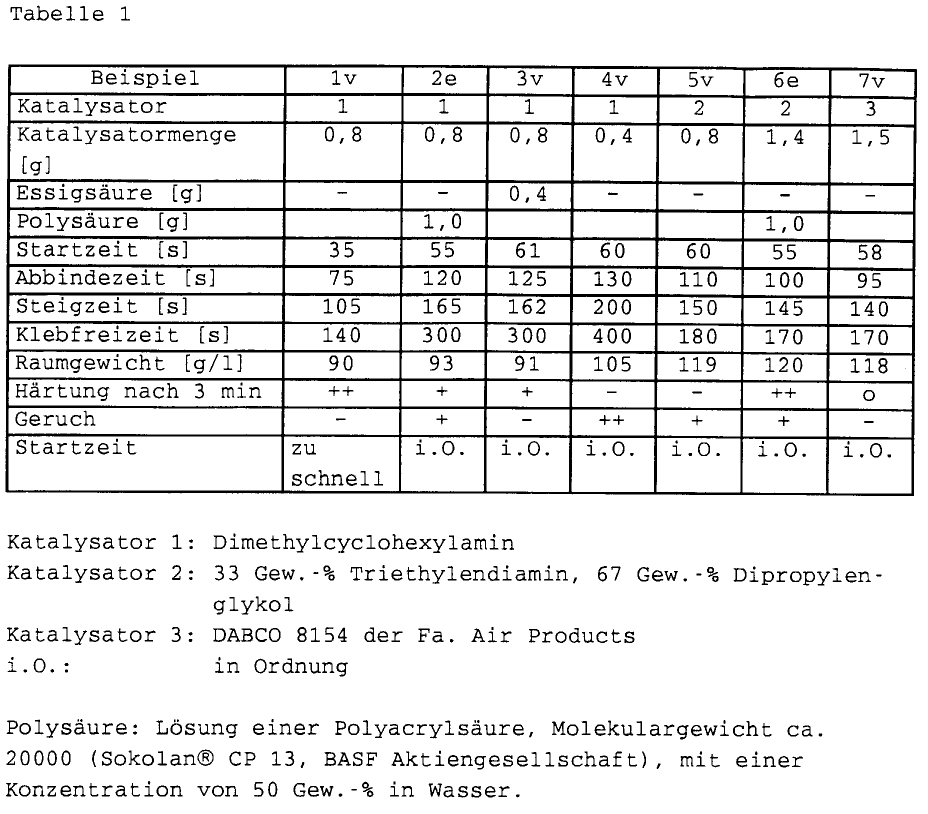

Die Beurteilung der Härtung und des Geruches wurde anhand von ++ (sehr gut) bis - (schlecht) vorgenommen.

Die mit den erfindungsgemaßen Mischungen hergestellten Schäume (2e, 6e) weisen eine ausgezeichnete Härtung nach 3 min und keine unangenehme Geruchsentwicklung bei der Reaktion auf. Im Gegensatz dazu startet das System im Beispiel 1v, bei dem der Katalysator nicht mit einer Säure blockiert wurde, zu schnell und ist damit unbrauchbar. Auch durch eine Verringerung der Katalysatormenge konnte kein befriedigendes Abbindeverhalten erreicht werden (Beispiel 4v, 5v). Die Blockierung des Katalysators mit Essigsäure im Beispiel 3v führte zu einer erheblichen Geruchsentwicklung, die in den erfindungsgemäßen Beispielen vermieden werden konnte. Auch handelsübliche Katalysatoren wiesen eine negative Geruchsentwicklung auf.

## Patentansprüche

1. Mischung enthaltend (a) mindestens ein organisches Amin und (b) mindestens eine organische Polysäure, die die folgende Struktureinheit aufweist: 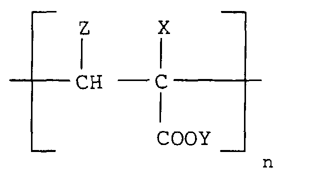 mit
n: eine ganze Zahl der Zahlenmenge von einschließlich 2 bis einschließlich 2600;
X: H oder geradkettiger oder verzweigter Alkylrest mit 1 bis 6 Kohlenstoffatomen, bevorzugt H, Methyl, Ethyl;
Y: H oder ein Kation;
Z: H oder -COOY.

2. Mischung nach Anspruch 1, dadurch gekennzeichnet, daß die Polysäuren in der Mischung zumindestens teilweise deprotoniert und als Salz mit den zumindestens teilweise protonierten Aminen vorliegen.

3. Mischung nach Anspruch 1 oder 2, dadurch gekennzeichnet, daß die Mischung als Polysäure Polyacrylsäure und/oder Polymethacrylsäure und/oder Polymere der Maleinsäure enthält.

4. Mischung nach einem der Ansprüche 1 bis 3, dadurch gekennzeichnet, daß die Mischung als (a) mindestens ein tertiäres aliphatisches und/oder cycloaliphatisches Amin enthält.

5. Mischung nach einem der Ansprüche 1 bis 3, dadurch gekennzeichnet, daß die Mischung als (a) Triethylamin, Triethylendiamin, Tributylamin, Dimethylbenzylamin, N,N,N',N'-Tetramethylethylendiamin, N,N,N',N'-Tetramethyl-butandiamin, N,N,N',N'-Tetramethyl-hexan-1,6-diamin, Dimethylcyclohexylamin, Pentamethyldipropylentriamin, Pentamethyldiethylentriamin, 3-Methyl-6-dimethylamino-3-azapentol, Dimethylaminopropylamin, 1,3-Bisdimethylaminobutan, Bis-(2-dimethylaminoethyl)-ether, N-Ethylmorpholin, N-Methylmorpholin, N-Cyclohexylmorpholin, 2-Dimethylamino-ethoxy-ethanol, Dimethylethanolamin, Tetramethylhexamethylendiamin, Dimethylamino-N-methyl-ethanolamin, N-Methylimidazol, N-Formyl-N,N'-dimethylbutylendiamin, N-Dimethylaminoethylmorpholin, 3,3'-Bis-dimethylamino-di-n-propylamin und/oder 2,2'-Dipiparazin-diisopropylether, Dimethylpiparazin, N,N'-Bis-(3-aminopropyl)-ethylendiamin und/oder Tris-(N,N-dimethylaminopropyl)-s-hexahydrotriazin enthält.

6. Mischung nach einem der Ansprüche 1 bis 5, dadurch gekennzeichnet, daß das Gewichtsverhältnis von (a) zu (b) 0,2 : 1 bis 5 : 1 beträgt.

7. Mischung nach einem der Ansprüche 1 bis 6, dadurch gekennzeichnet, daß die Mischungen zusätzlich zu (a) und (b) gegenüber Isocyanaten reaktive Verbindungen (c) mit mindestens einer Hydroxyl- und/oder Amingruppe und einem Molekulargewicht von 60 bis 10000 und gegebenenfalls Katalysatoren, die die Reaktion der gegenüber Isocyanaten reaktiven Stoffe (c) mit Isocyanaten zusätzlich zu den erfindungsgemäßen Aminen beschleunigen, Treibmittel, Zusatzstoffe, und/oder Hilfsmittel enthält.

8. Mischung nach einem der Ansprüche 1 bis 6, dadurch gekennzeichnet, daß die Mischungen zusätzlich zu (a) und (b) Verbindungen mit mindestens einer freien Isocyanatgruppe enthalten.

9. Verfahren zur Herstellung von Polyisocyanat-Polyadditionsprodukten durch Umsetzung von Isocyanaten mit gegenüber Isocyanaten reaktiven Verbindungen in Gegenwart von Katalysatoren und gegebenenfalls Treibmitteln, Zusatzstoffen und/oder Hilfsmitteln, dadurch gekennzeichnet, daß man die Umsetzung in Gegenwart von Mischungen nach einem der Ansprüche 1 bis 8 durchführt.

10. Verfahren zur Herstellung von geschäumten Polyisocyanat-Polyadditionsprodukten durch Umsetzung von Isocyanaten mit gegenüber Isocyanaten reaktiven Verbindungen in Gegenwart von Katalysatoren, Treibmitteln, Zusatzstoffen und/oder Hilfsmitteln, dadurch gekennzeichnet, daß man die Umsetzung in Gegenwart von Mischungen nach einem der Ansprüche 1 bis 7 durchführt.

11. Polyisocyanat-Polyadditionsprodukte enthaltend Polysäuren gemäß Formel 1, deren Salze und/oder Umsetzungsprodukte der Polysäuren durch eine Reaktion mit den Polyisocyanaten.

12. Polyisocyanat-Polyadditionsprodukte erhältlich nach einem Verfahren gemäß Anspruch 9 oder 10.
